# EUROPÄISCHE PATENTSCHRIFT

(11) **EP 2 142 384 B1**
(45) Veröffentlichungstag und Bekanntmachung des Hinweises auf die Patenterteilung: **29.08.2018**
(21) Anmeldenummer: 08735611.9
(22) Anmeldetag: 31.03.2008
(51) Int. Cl.: B60B 19/12, B62D 61/12, B62D 65/12, B62D 63/02, B25J 5/00, B25J 9/00, B60G 3/01, B62D 61/10, B60K 7/00

(54) **OMNIDIREKTIONALES FAHRZEUG, AUCH MODULAR, UND MOBILER INDUSTRIEROBOTER**
OMNIDIRECTIONAL VEHICLE, POSSIBLY MODULAR, AND MOBILE INDUSTRIAL ROBOT
VÉHICULE OMNIDIRECTIONNEL, ÉVENTUELLEMENT MODULAIRE, ET ROBOT INDUSTRIEL MOBILE

(30) Priorität: 04.04.2007 DE 102007016662
(43) Veröffentlichungstag der Anmeldung: 13.01.2010
(73) Patentinhaber: KUKA Deutschland GmbH, 86165 Augsburg (DE)
(72) Erfinder: NÜCHTER, Elmar, 86167 Augsburg (DE); BAHR, Edmund, 86438 Kissing (DE); LOHMÜLLER, Heinrich, 86152 Augsburg (DE)
(74) Vertreter: Ege Lee & Partner Patentanwälte PartGmbB
(86) Internationale Anmeldenummer: PCT/EP2008/053819
(87) Internationale Veröffentlichungsnummer: WO 2008/122538

(56) Entgegenhaltungen:
- WO-A-01/53137
- DE-A1- 3 733 695
- FR-A- 2 701 429
- JP-A- 60 107 464
- US-A- 5 323 867
- US-A1- 2003 183 427
- US-A1- 2004 035 636

## Beschreibung

Die Erfindung betrifft ein omnidirektionales Fahrzeugs und einen mobilen Industrieroboter.

Ein Beispiel eines omnidirektionalen Rades oder Allseitenrads ist das sogenannte Mecanum-Rad, das beispielsweise aus der US 3,876,255 bekannt ist. Ein omnidirektionales Rad kann sich in jeder Richtung bewegen und weist im Allgemeinen Rollkörper auf, deren Oberflächen z.B. ballig oder tonnenförmig ausgebildet sind und deren Rollkörperachsen schräg, meist im Winkel von 45° zur Achse des Rades, angebracht sind.

Die DE 20 2004 015 422 U1 offenbart ein omnidirektionales Fahrzeug mit Mecanum-Rädern, das z.B. für Arbeiten auf dem Flugplatzvorfeld eingesetzt wird. Konventionelle omnidirektionale Fahrzeuge und können jedoch nur mit einer relativ geringen Geschwindigkeit von etwa bis zu 6km/h fahren. Des Weiteren sind die Mecanum-Räder bei konventionellen omnidirektionalen Fahrzeugen starr am Fahrzeug befestigt, was z.B. bei einem unebenen Boden zu einem relativ schlechten Fahrverhalten führen kann.

Die DE 37 33 695 A1 offenbart ein Fahrwerk für Flurförderfahrzeuge. Das Fahrwerk umfasst vier, mehrere Freiheitsgrade in der Ebene aufweisende Räder, die jeweils mit einer Einzellagerung versehen sind.

Die US 2004/035636 A1 offenbart ein omnidirektionales Fahrzeug, bei dem zwei mittlere Räder jeweils eine Einzelradaufhängung in Form einer Schwinge aufweisen. Die FR 2 701 429 A1 offenbart ein omnidirektionales Fahrzeug als Förderfahrzeug nach dem Oberbegriff des Anspruchs 1.

Die Aufgabe der vorliegenden Erfindung ist es daher, ein flexibleres omnidirektionales Fahrzeug anzugeben.

Die Aufgabe der Erfindung wird gelöst durch ein omnidirektionales Fahrzeug gemäß dem Patentanspruch 1.

Insbesondere können alle omnidirektionalen Räder jeweils mittels einer Einzelradaufhängung am Fahrzeugkörper angeordnet sein.

Ein omnidirektionales Rad weist in der Regel eine drehbar gelagerte Felge auf, an der mehrere Rollkörper antriebslos drehbar gelagert sind. Die Felge kann mit einem Antrieb, z.B. einem elektrischen oder hydraulischen Antrieb, angetrieben werden. Ein Beispiel eines omnidirektionales Rad ist das sogenannte Mecanum-Rad, wie es u.A. aus der US 3,876,255 bekannt ist.

Das erfindungsgemäße Fahrzeug weist insbesondere wenigstens vier omnidirektionale Räder auf, die jeweils mittels einer Einzelradaufhängung am Fahrzeugkörper angeordnet sind.

Die Einzelradaufhängungen, mit denen die omnidirektionalen Räder oder auch Räderpaare aufgehängt sind, bewirkt, dass der Bodenkontakt der einzelnen omnidirektionalen Räder im Vergleich zu starr aufgehängten omnidirektionalen Rädern, wie dies bei konventionellen omnidirektionalen Fahrzeugen der Fall ist, verbessert wird. Dadurch wird die Gefahr, dass eines der omnidirektionalen Räder den Bodenkontakt verliert, zumindest verringert, wodurch alle Räder des omnidirektionalen Fahrzeugs belastet bleiben. Dadurch kann die Gefahr einer Überbelastung des erfindungsgemäßen Fahrzeugs verringert, wenn nicht gar verhindert werden. Durch die verbesserte Bodenhaftung kann sich auch ein verbessertes spurtreues Fahrverhalten des erfindungsgemäßen Fahrzeugs ergeben.

Die Einzelradaufhängung kann eine Dämpfung aufweisen, die das entsprechende omnidirektionale Rad im Betrieb des erfindungsgemäßen Fahrzeugs zumindest teilweise dämpft. Dies kann zu einem rüttelfreien Betrieb führen.

Die Einzelradaufhängung des erfindungsgemäßen Fahrzeugs ist derart ausgeführt, dass das entsprechende omnidirektionale Rad in der Höhe einstellbar ist. Durch die Höhenverstellbarkeit kann z.B. ein schiefer oder krummer Boden, auf dem das erfindungsgemäße Fahrzeug fährt oder steht, zumindest teilweise kompensiert werden. Auch ist es dadurch möglich, eine Ladefläche des erfindungsgemäßen Fahrzeugs nicht nur waagrecht, sondern auch gezielt schief auszurichten, beispielsweise in Fahrtrichtung oder quer zur Fahrtrichtung.

Gemäß Ausführungsformen des erfindungsgemäßen Fahrzeugs ist dessen Einzelradaufhängung derart ausgeführt, dass dessen Einzelradaufhängung eine Hubvorrichtung und/oder einen Umlenkhebel aufweist. Durch diese Maßnahmen kann die Höhenregulierung des Rades in relativ einfacher Weise vollzogen werden. Als Hubvorrichtung können z.B. Zylinder, Spindel oder Umlenkhebel verwendet werden.

Die Einzelradaufhängung ist beispielsweise eine lineargeführte Einheit oder eine Schwinge.

Eine automatische Niveauregulierung kann insbesondere dann relativ einfach ausgeführt werden, wenn nach einer Variante des erfindungsgemäßen Fahrzeugs dieses wenigstens einen Abstandssensor aufweist, mit dessen Hilfe die Höhe des omnidirektionalen Rades einstellbar ist. Dieser Abstandssensor misst z.B. den Bodenabstand vor dem erfindungsgemäßen Fahrzeug und reguliert automatisch die Höhe der einzelnen Räder. Dadurch ist es z.B. möglich, dass das erfindungsgemäße Fahrzeug Hindernisse, z.B. eine Stufe, überfahren kann.

Die Einzelradaufhängung kann insbesondere einen Schwingungsdämpfer aufweisen. Diese sind relativ einfach herzustellen und haben zusätzlich eine dämpfende Eigenschaft für das Rad. Der Schwingungsdämpfer kann z.B. ein Rohrdämpfer oder ein Dämpfungszylinder sein.

Einige oder alle omnidirektionalen Räder des erfindungsgemäßen Fahrzeugs können durch entsprechende Antriebe angetrieben und/oder durch Bremsen abgebremst werden. Die Antriebe sind z.B. elektrische oder hydraulische Antriebe und treiben insbesondere die Felgen der omnidirektionalen Räder an. Das erfindungsgemäße omnidirektionale Fahrzeug weist zusätzlich wenigstens ein Standardrad auf, das mittels einer Einzelradaufhängung am Fahrzeugkörper drehbar angeordnet ist. Ein Standardrad hat keine omnidirektionale Eigenschaft und kann z.B. ein Vollgummirad sein.

Die Einzelradaufhängung des Standardrads ist erfindungsgemäß im Wesentlichen wie die Einzelradaufhängung des omnidirektionalen Rads ausgeführt ist. Somit ist es z.B. möglich, das erfindungsgemäße Fahrzeug in einem ersten Betriebsmodus zu betreiben, in dem die omnidirektionalen Räder eingefahren oder zumindest angehoben sind und nur die Standardräder Bodenkontakt haben. In diesem Betriebsmodus kann dann das erfindungsgemäße Fahrzeug gemäß dieser Variante relativ schnell fahren. In einem zweiten Betriebsmodus werden dann die omnidirektionalen Räder ausgefahren und die Standardräder eingefahren oder zumindest angehoben, sodass die Standardräder keinen Bodenkontakt mehr haben und das erfindungsgemäße Fahrzeug seine omnidirektionale Eigenschaft hat.

Das erfindungsgemäße Fahrzeug kann mehrere Standardräder mit einer Einzelradaufhängung aufweisen, von denen wenigstens eines lenkbar ausgeführt ist und/oder wenigstens einem ein Antrieb zum Antreiben des Standardrades zugeordnet ist. Nach dieser Variante des erfindungsgemäßen Fahrzeugs ist dieses in seinem ersten Betriebsmodus auch lenkbar und/oder automatisch fahrbar. Dadurch ist es möglich, diese Variante des erfindungsgemäßen Fahrzeugs relativ schnell von einem Standort zum nächsten im ersten Betriebsmodus zu bewegen und am Einsatzort als omnidirektionales Fahrzeug einzusetzen. Durch die Einzelradaufhängung der Standardräder wird auch eine Überführung des erfindungsgemäßen Fahrzeugs auf unebene Böden zumindest erleichtert. Der Antrieb für das Standardrad ist beispielsweise ein elektrischer oder ein hydraulischer Antrieb.

Gemäß einer weiteren Variante des erfindungsgemäßen Fahrzeugs weist dessen Fahrzeugkörper mehrere erste Fahrmodule auf, die jeweils aufweisen:
- einen ersten Modulkörper,
- das omnidirektionale Rad und
- die Einzelradaufhängung, die am ersten Modulkörper angeordnet ist.

Aufgrund dieser Variante können verschieden große omnidirektionale Fahrzeuge aus den einzelnen ersten Fahrmodulen zusammengestellt werden. So kann z.B. die maximale Zuladung der einzelnen omnidirektionalen Räder beim Zusammenstellen berücksichtigt werden. In der Regel benötigt man wenigsten vier solcher Fahrmodule, um ein omnidirektionales Fahrzeug zu erhalten.

Wenigstens eines der ersten Modulkörper kann einen Antrieb zum Antreiben und/oder ein Bremse zum Abbremsen seines omnidirektionalen Rades aufweisen. Dieser Antrieb ist z.B. ein elektrischer oder ein hydraulischer Antrieb.

Die ersten Fahrmodule können lösbar oder unlösbar zusammengefügt werden. Die lösbare Variante ist unter Umständen flexibler. Gemäß einer weiteren Ausführungsform des erfindungsgemäßen Fahrzeugs weist dessen Fahrzeugkörper mehrere zweite Fahrmodule auf, die jeweils aufweisen:
- einen zweiten Modulkörper,
- das Standardrad und
- die Einzelradaufhängung, die am zweiten Modulkörper angeordnet ist.

' Die zweiten Modulkörper können insbesondere im Wesentlichen baugleich zu den ersten Modulkörpern ausgeführt sein. Mittels der zweiten Fahrmodule kann man ein Fahrzeug zusammenstellen, das in den beiden obenstehend beschriebenen Betriebsmodi betrieben werden kann.

Wenigstens eines der zweiten Modulkörper kann einen Antrieb zum Antreiben und/oder eine Bremse zum Abbremsen seines Standardrades aufweisen.

Die ersten und zweiten Fahrmodule können lösbar oder unlösbar zusammengefügt werden und/oder wenigstens eines der zweiten Fahrmodule kann derart ausgeführt sein, dass dessen Standardrad lenkbar ist.

In einem weiteren Aspekt, der nicht Teil der vorliegenden Erfindung ist, wird ein omnidirektionales Fahrmodul bereit gestellt, aufweisend:
- ein omnidirektionales Rad mit einer Einzelradaufhängung,
- einen Modulkörper, an dem das omnidirektionale Rad mittels der Einzelradaufhängung befestigt ist,
- einen Antrieb zum Antreiben des omnidirektionalen Rads und
- Kopplungsmittel zum Verbinden des Fahrmoduls mit weiteren omnidirektionalen Fahrmodulen.

Mit mehreren dieser Fahrmodulen lässt sich das erfindungsgemäße omnidirektionale Fahrzeug zusammenstellen. Die Kopplungsmittel sind z.B. Schrauben, Dübel, Nieten und können lösbar oder unlösbar ausgeführt sein, wenn ein omnidirektionales Fahrzeug aus mehreren Fahrmodulen zusammengestellt wurde. Der Antrieb ist beispielsweise ein elektrischer oder ein hydraulischer Antrieb.

Nach Ausführungsformen des erfindungsgemäßen Fahrmoduls weist dessen Einzelradaufhängung eine Dämpfung zum Dämpfen und/oder eine Bremse zum Abbremsen des omnidirektionalen Rads auf und/oder weist eine Hubvorrichtung und/oder einen Umlenkhebel auf.

Nach Varianten des erfindungsgemäßen Fahrmoduls ist dessen Einzelradaufhängung derart ausgeführt, dass das omnidirektionale Rad in der Höhe einstellbar und/oder dass das omnidirektionales Rad in den Modulkörper einfahren und zumindest teilweise aus dem Modulkörper ausfahren kann.

Das erfindungsgemäße Fahrmodul kann wenigstens einen Abstandssensor aufweisen, mit dessen Hilfe die Höhe des omnidirektionalen Rades insbesondere für eine Niveauregulierung einstellbar ist.

Die Einzelradaufhängung kann einen Schwingungsdämpfer aufweisen, der z.B. zylinderförmig ausgeführt ist.

In einem weiteren Aspekt der Erfindung wird eine Vorrichtung bereitgestellt, aufweisend:
- einen Industrieroboter, der mehrere Roboterachsen und einen Steuerrechner zum Steuern der Roboterachsen aufweist, und
- ein omnidirektionales Trägerfahrzeug, das omnidirektionale Räder und Antriebe zum Bewegen der omnidirektionalen Räder aufweist, wobei der Steuerrechner zusätzlich auch die Antriebe zum Bewegen der omnidirektionalen Räder steuert.

Das Trägerfahrzeug ist ein erfindungsgemäßes omnidirektionales Fahrzeug, wie obenstehend beschrieben. Die erfindungsgemäße Vorrichtung weist also den Industrieroboter auf, der mittels des omnidirektionalen Transportfahrzeugs bewegt werden kann. Der Industrieroboter weist mehrere Roboterachsen auf, die in allgemein bekannter Weise vom Steuerrechner bewegt werden. Dazu weist der Industrieroboter beispielsweise allgemein bekannte Antriebe auf.

Zusätzlich steuert dieser Steuerrechner auch noch die Antriebe des omnidirektionalen Transportfahrzeugs an, wodurch die Gesamtheit aus Industrieroboter und Transportfahrzeug durch den Steuerrechner des Industrieroboters gesteuert wird. Dadurch kommt nur eine Steuerung zum Einsatz.

Die Antriebe für die Räder können als Zusatzachsen im Steuerprogramm des Steuerrechners hinterlegt werden. Weist der Industrieroboter z.B. sechs Roboterachsen auf, dann können den einzelnen Antrieben für die Räder jeweils eine weitere Achse im Steuerprogramm zugeordnet werden. Dies erlaubt eine gleichzeitige aufeinander abgestimmte Bewegung des Industrieroboters mit dem Trägerfahrzeug.

Des Weiteren kann ein integriertes Wegmesssystem der Roboterachsen zur freiprogrammierbaren Positionsveränderung des Industrieroboters in großflächigen Nutzbereichen angewandt werden.

Positionsabweichungen der kompletten Vorrichtung können sowohl vom Industrieroboter als auch vom Trägerfahrzeug kompensiert werden.

Ausführungsbeispiele der Erfindung sind exemplarisch in den beigefügten schematischen Zeichnungen dargestellt. Es zeigen:
- Fig. 1: ein omnidirektionales Rad,
- Fig. 2 und 3: jeweils ein Fahrmodul mit einem omnidirektionalen Rad in zwei verschiedenen Betriebszuständen,
- Fig. 4 bis 6: ein omnidirektionales Fahrzeug,
- Fig. 7 und 8: ein weiteres omnidirektionales Fahrzeug,
- Fig. 9 und 10: ein weiteres Fahrmodul mit einem omnidirektionalen Rad in zwei verschiedenen Betriebszuständen und
- Fig. 11: einen auf einem omnidirektionalen Trägerfahrzeug befestigten Industrieroboter,

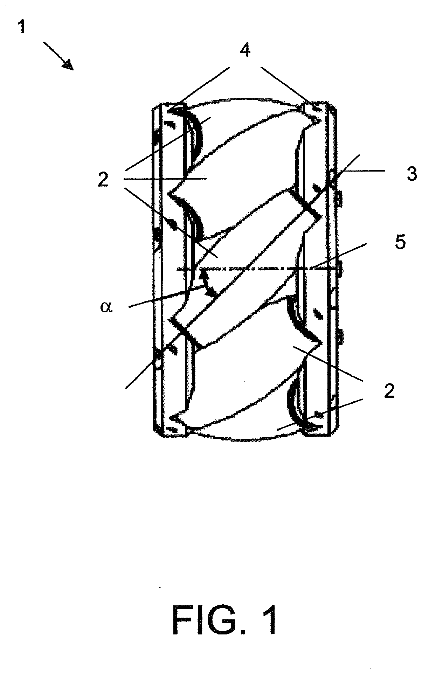

Die Figur 1 zeigt eine Frontansicht eines dem Fachmann im Wesentlichen bekannten Mecanum-Rades 1 als Beispiel eines omnidirektionalen Rads. Das Rad 1 weist zwei starr miteinander verbundene Radscheiben 4 auf, zwischen denen mehrere Rollkörper 2 bezüglich ihrer Längsachsen 3 drehbar gelagert sind. Die beiden Radscheiben 4 können bezüglich einer Drehachse 5 drehbar gelagert werden und mittels eines in der Figur 1 nicht näher dargestellten Antriebs derart angetrieben werden, dass sich die beiden Radscheiben 4 bezüglich der Drehachse 5 drehen.

Im Falle des vorliegenden Ausführungsbeispiels sind die Rollkörper 2 gleichmäßig zueinander beabstandet und derart an den Radscheiben 4 gelagert, dass ihre Rollflächen über den Umfang der Radscheiben 4 herausragen. Außerdem sind die Rollkörper 2 derart an den Radscheiben 4 gelagert, dass ihre Längsachsen 3 mit der Drehachse 5 einen Winkel α von beispielsweise 45° aufweisen.

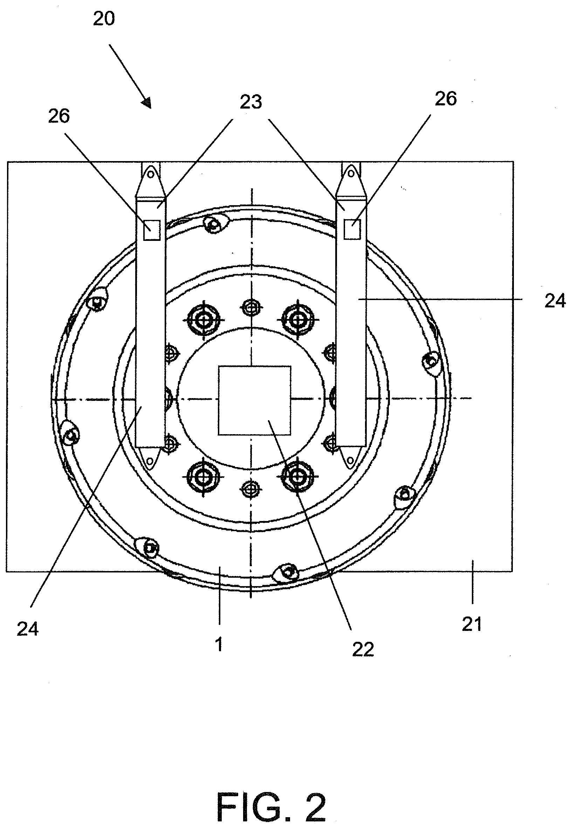

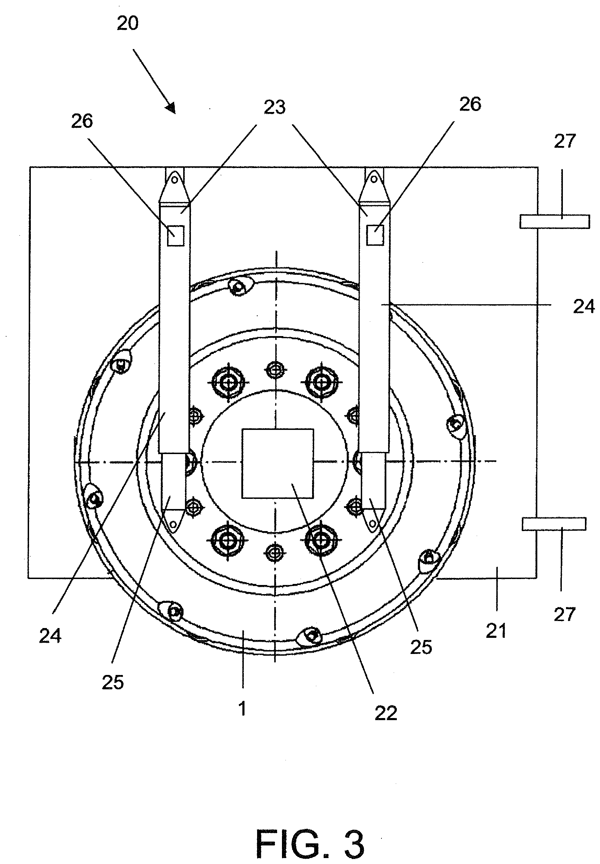

Die Figuren 2 und 3 zeigen ein omnidirektionales Fahrmodul 20 mit einem Modulkörper 21 und dem in der Figur 1 gezeigten Mecanum-Rad 1 als Beispiel eines omnidirektionalen Rads. In den Figuren 2 und 3 ist das Rad 1 in einer Seitenansicht dargestellt.

Das Rad 1 ist mittels einer Einzelradaufhängung am Modulkörper 21 befestigt. Die Einzelradaufhängung für das Rad 1 ist derart ausgeführt, dass sich das Rad 1 längs seiner Drehachse 5 drehen und im Falle des vorliegenden Ausführungsbeispiels mittels eines Antriebs 22 angetrieben werden kann. Der Antrieb 22 umfasst beispielsweise in allgemein bekannter weise einen elektrischen Motor, der über in den Figuren nicht näher dargestellten elektrischen Leitungen gesteuert und mit elektrischer Energie versorgt werden kann. Alternativ kann insbesondere auch ein hydraulischer Antrieb verwendet werden.

Im Falle des vorliegenden Ausführungsbeispiels umfasst die Einzelradaufhängung für das Rad 1 zwei Schwingungsdämpfer 23, die jeweils ein Außenrohr 24 und ein Innenrohr 25 aufweisen. Das Innenrohr 25 ist im Außenrohr 24 angeordnet und kann im Falle des vorliegenden Ausführungsbeispiels um eine vorgegebene Wegstrecke ausgefahren werden. Die Figur 2 zeigt die Schwingungsdämpfer 23 in ihren eingefahrenen und die Figur 3 zeigt die Schwingungsdämpfer 23 in ihren ausgefahrenen Zuständen. Die Innenrohre 23 können z.B. mittels Linearantrieben 26 aus- und eingefahren werden, wie dies in den Figuren 2 und 3 gezeigt ist, oder auch in Zwischenpositionen gebracht werden.

Eines der Enden jedes der Außenrohre 24 ist am Modulkörper 21 befestigt. Die den jeweiligen dieser Enden der Außenrohre 24 abgewandten Enden der Innenrohre 25 sind am Rad 1 befestigt, sodass dieses einerseits drehbar am Modulkörper 21 befestigt ist und andererseits aufgrund der Möglichkeit das Innerohr 25 ein- und auszufahren in den Modulkörper 21 zumindest teilweise eingefahren, wie dies in der Figur 2 dargestellt ist, und teilweise aus dem Modulkörper 20 ausgefahren werden kann, wie dies die Figur 3 zeigt.

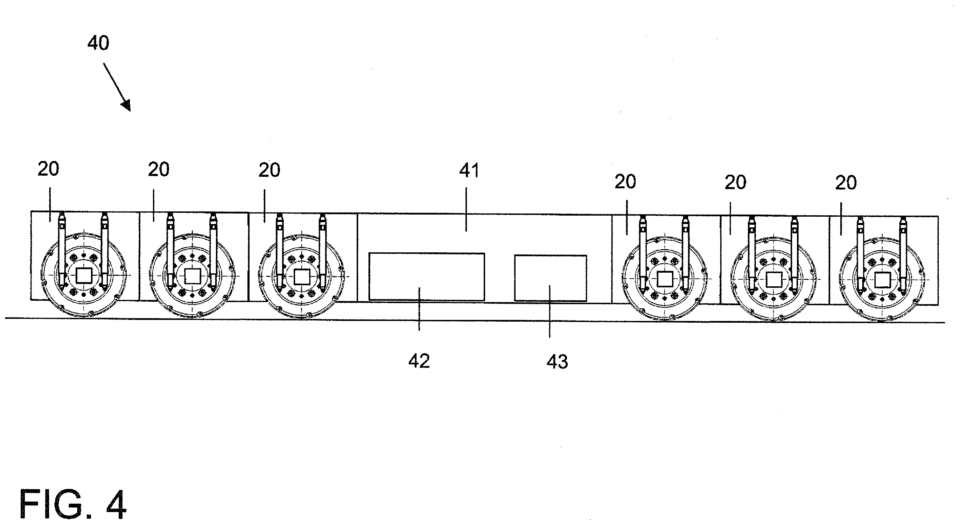

Die Figuren 4 bis 6 zeigen eine Seitenansicht eines omnidirektionalen Fahrzeugs 40, das wenigstens vier, im Falle des vorliegenden Ausführungsbeispiels zwölf Fahrmodule 20 aufweist. Damit die Fahrmodule 20 zum Fahrzeug 40 zusammengefügt werden können, umfassen diese Kopplungsmittel, mittels derer die Fahrmodule 20 zusammengefügt werden können. Im Falle des vorliegenden Ausführungsbeispiels werden die einzelnen Fahrmodule 20 miteinender mittels Schrauben 27 verschraubt und können somit auch wieder auseinander genommen werden. Somit ist es möglich, verschieden große omnidirektionale Fahrzeuge aus den einzelnen Fahrmodulen 20 zusammenzustellen.

Im Falle des vorliegenden Ausführungsbeispiels weist das Fahrzeug 40 auch ein Trägermodul 41 auf, das mit den Fahrmodulen 20 verschraubt wurde. Die Oberseiten der Fahrmodule 20 und des Trägermoduls 41 ergeben eine Ladefläche, auf der z.B. nicht näher dargestellte Gegenstände transportiert werden können.

Im Falle des vorliegenden Ausführungsbeispiels sind im Trägermodul 41 eine Batterie 42 und eine Steuervorrichtung 43 angeordnet. Die Batterie 42 ist in nicht dargestellter Weise mit den Antrieben 22 der Räder 1 und mit den Linearantrieben 26 der Schwingungsdämpfer 23 verbunden, um diese mit elektrischer Energie zu versorgen. Die Steuervorrichtung 43 ist ebenfalls in nicht dargestellter Weise mit den Antrieben 22 der Räder 1 und mit den Linearantrieben 26 der Schwingungsdämpfer 23 verbunden, um diese zu steuern. Die Steuervorrichtung 43 ist u.A. derart eingerichtet, dass sie die Linearantriebe 26 der Fahrmodule 20 einzeln derart ansteuert, dass deren Räder 1 individuell ein- und ausgefahren werden können.

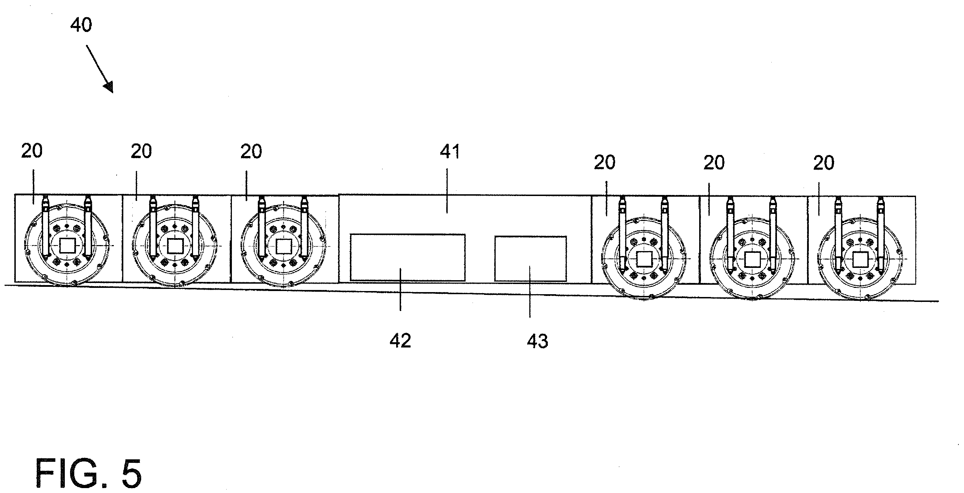

In der Figur 4 sind alle Fahrmodule 20 des Fahrzeugs 40 in einem Betriebszustand, in dem alle Räder 1 ausgefahren sind, und in der Figur 5 sind die Räder 1 der auf der linken Zeichenseite gezeigten Fahrmodule 20 eingefahren und die Räder 1 der auf der rechten Zeichenseite gezeigten Fahrmodule 20 ausgefahren dargestellt. Somit ist es z.B. möglich, dass die Ladefläche des Fahrzeugs 40 gekippt oder dass die Ladefläche auch bei einem unebenen oder schiefen Boden, auf dem das Fahrzeug 40 fährt oder steht, waagrecht ausgerichtet werden kann.

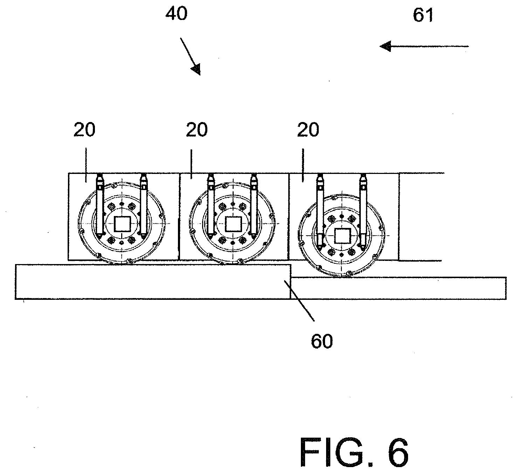

Durch das individuelle Ein- und Ausfahren der Räder 1 des Fahrzeugs 4 ist es beispielsweise auch möglich, dass das Fahrzeug 40 über eine Stufe 60 fahren kann, ohne dass die Ladefläche kippt, wie dies in der Figur 6 gezeigt ist. Fährt z.B. das Fahrzeug 40 in Richtung eines Pfeils 61 über die Stufe 60, dann werden nacheinander die Räder 1 der einzelnen Fahrmodule 20 schrittweise eingefahren, bis das Fahrzeug 40 die Stufe 60 überwunden hat.

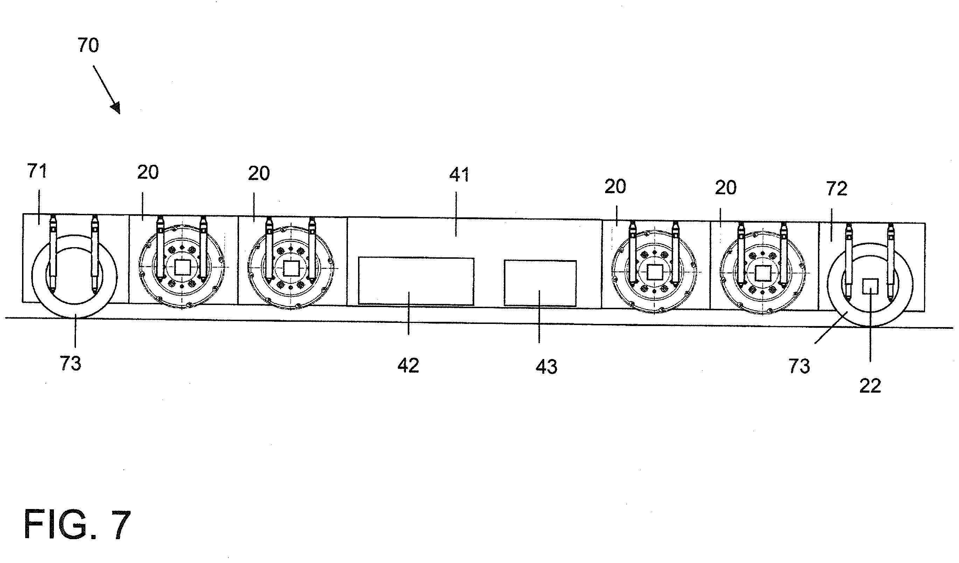

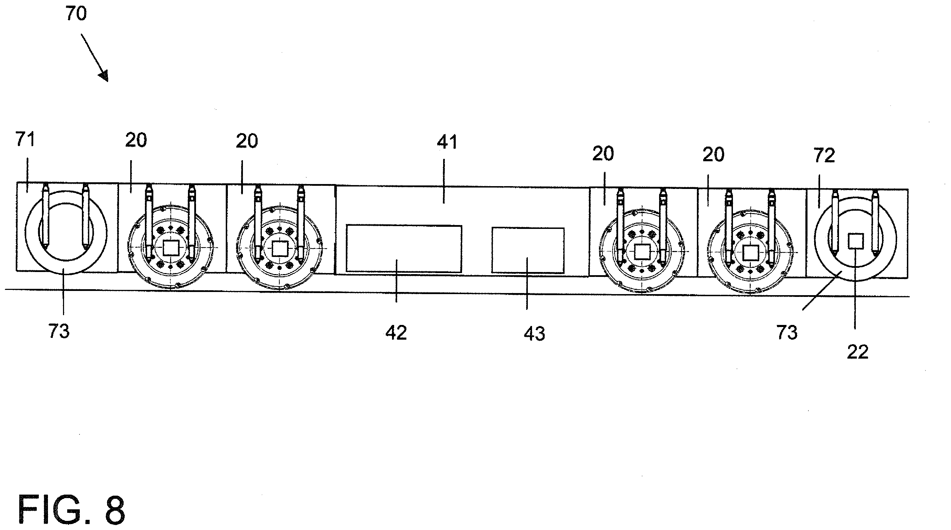

Die Figuren 7 und 8 zeigen ein weiteres omnidirektionales Fahrzeug 70, das im Falle des vorliegenden Ausführungsbeispiels acht Fahrmodule 20, ein Trägermodul 41, zwei Fahrmodule 71 und zwei Fahrmodule 72 aufweist. Die Fahrmodule 20 sind omnidirektionale Fahrmodule 20 wie obenstehend beschrieben und in den Figuren 2 und 3 gezeigt. Die Fahrmodule 71, 72 unterscheiden sich von den omnidirektionalen Fahrmodulen dadurch, dass diese keine omnidirektionalen Räder 1, sondern Standardräder 73 aufweisen. Im Falle des vorliegenden Ausführungsbeispiels handelt es sich bei den Standardrädern 73 um Vollgummiräder, die mittels Schwingungsdämpfer 23 an ihren Modulkörpern 21 befestigt sind.

Im Falle des vorliegenden Ausführungsbeispiels sind die Modulkörper 21 der omnidirektionalen Fahrmodule 20 und der Fahrmodule 71, 72 mit den Standardrädern 73 im Wesentlichen baugleich. Außerdem haben die Standardräder 73 dieselben Durchmesser wie die omnidirektionalen Räder 1 und können mittels der Schwingungsdämpfer 23 ein- und ausgefahren werden. Dazu sind die Linearantriebe 26 dieser Schwingungsdämpfer 23 ebenfalls mit der Steuervorrichtung 43 und der Batterie 42 in nicht dargestellter Weise verbunden.

Im Falle des vorliegenden Ausführungsbeispiels weisen die Fahrmodule 72 mit den Standardrädern 73 jeweils einen elektrischen Antrieb 22 auf, der mit den elektrischen Antrieben der omnidirektionalen Fahrmodulen 20 vergleichbar ist. Die Fahrmodule 71 mit den Standardrädern 73 weisen dagegen keine elektrischen Antriebe auf, sind aber lenkbar. Somit ist es möglich, dass das Fahrzeug 70 in dem in der Figur 7 dargestellten Betriebszustand mit eingefahrenen omnidirektionalen Rädern 1, aber mit ausgefahrenen Standardrädern 73 betrieben werden kann und in diesem Betriebszustand auch lenkbar ist. Die lenkbaren Fahrmodule 71 können aber auch einen elektrischen Antrieb umfassen. Alternativ können die Standardräder 73 auch mittels hydraulischer Antriebe angetrieben werden.

Die Figur 8 zeigt das Fahrzeug 70 in einem zweiten Betriebszustand, in dem die Standardräder 73 der Fahrmodule 71, 72 eingefahren, die omnidirektionalen Räder 1 der omnidirektionalen Fahrmodule 20 dagegen ausgefahren sind. In diesem Betriebszustand funktioniert das Fahrzeug 70 wie ein omnidirektionales Fahrzeug.

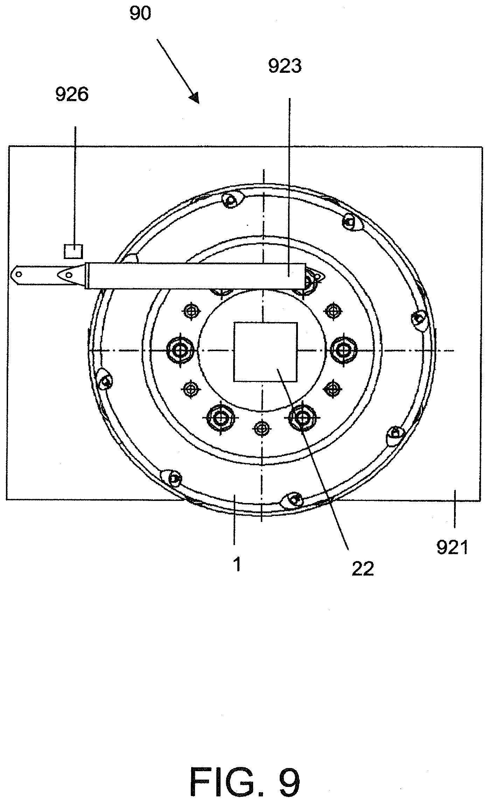

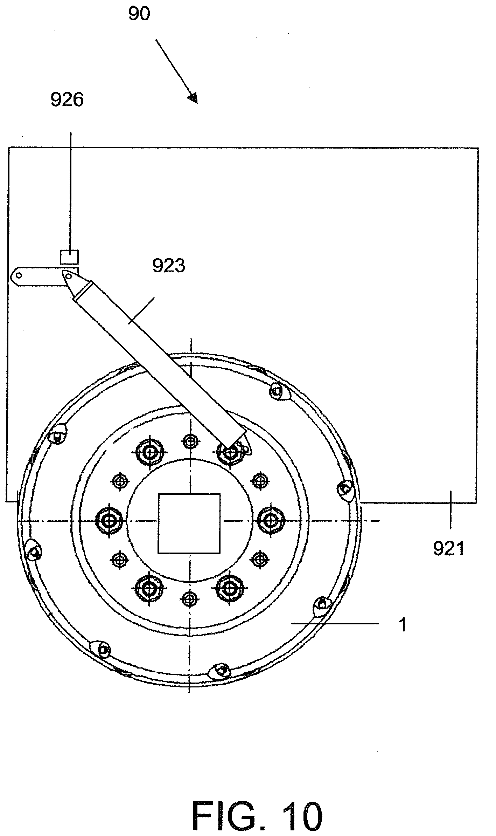

Die Figuren 9 und 10 zeigen eine weitere Ausführungsform eines omnidirektionalen Fahrmoduls 90. Wenn folgend nicht anders beschrieben, dann sind Bestandteile des in den Figuren 9 und 10 gezeigten omnidirektionalen Fahrmoduls 90, die mit Bestandteilen des in den Figuren 2 und 3 dargestellten omnidirektionalen Fahrmoduls 20 weitgehend bau- und funktionsgleich sind, mit denselben Bezugszeichen versehen.

Das omnidirektionale Fahrmodul 90 der Figuren 9 und 10 unterscheidet sich im Wesentlichen von dem in den Figuren 2 und 3 gezeigten omnidirektionalen Fahrmodul 1 durch seine Einzelradaufhängung des Rads 1 am Modulkörper 921 des Fahrmoduls 100.

Im Falle des in den Figuren 8 und 9 gezeigten Ausführungsbeispiels umfasst die Einzelradaufhängung für das Rad 1 einen Schwingungsdämpfer 923, der hier jedoch kein Außenrohr und kein mittels eines Linierantriebs ausfahrbares Innenrohr aufweist. Vielmehr ist eines der Enden des Schwingungsdämpfers 923 schwenkbar am Modulkörper 921 gelagert und das andere Ende am Rad 1 befestigt, sodass das Rad 1 z.B. mittels eines Elektromotors 926 in den Modulkörper 921 geschwenkt und aus dem Modulkörper 921 zumindest teilweise herausgeschwenkt werden kann.

Der Betriebszustand, in dem das Rad 1 zumindest größtenteils im Modulkörper 921 geschwenkt ist, ist in der Figur 9 gezeigt. Die Figur 10 zeigt das Rad 1 zumindest teilweise aus dem Modulkörper 921 geschwenkt.

Das omnidirektionale Fahrmodul 90 kann für die Fahrzeuge 40, 70 anstelle der Fahrmodule 20 verwendet werden.

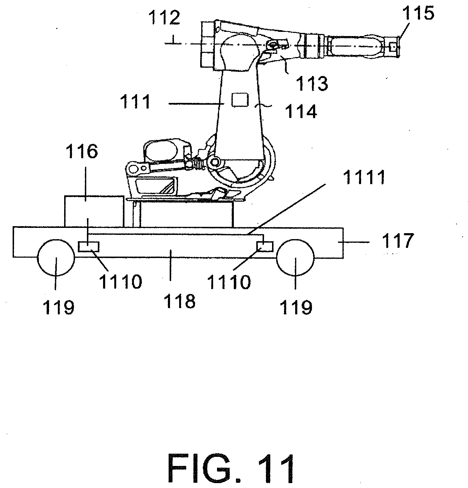

Die Fig. 11 zeigt einen Industrieroboter 111 mit einer Kinematik für Bewegungen in beispielsweise sechs Freiheitsgraden. Der Industrieroboter 111 weist in allgemein bekannter Weise sechs Bewegungsachsen, Gelenke, Hebel 113, 114 und einen Flansch 115 auf. In der Figur 11 ist nur eine der Bewegungsachsen mit dem Bezugszeichen 112 versehen.

Jede der Bewegungsachsen 112 wird von einem nicht näher dargestellten Antrieb bewegt. Die Antriebe umfassen beispielsweise jeweils einen elektrischen Motor und Getriebe, wie es dem Fachmann allgemein bekannt ist.

Der Industrieroboter 111 weist ferner einen Steuerrechner 116 auf, der mit den Antrieben des Industrieroboters 111 in nicht dargestellter Weise verbunden ist und diese in allgemein bekannter Weise mittels eines auf dem Steuerrechner 116 laufenden Rechnerprogramms steuert, sodass der Flansch 115 des Industrieroboters 111 eine vorgegebene Bewegung durchführt.

Die Figur 11 zeigt ferner ein omnidirektionales Fahrzeug 117 mit einem Grundkörper 118 und mit im Falle des vorliegenden Ausführungsbeispiels vier omnidirektionalen Rädern 119, von denen in der Figur 11 zwei der Räder 119 gezeigt sind. Die omnidirektionalen Räder 119 sind z.B. wie das Mecanum-Rad 1 der Figur 1 ausgeführt und Einzelrad aufgehängt.

Auf dem Grundkörper 118 des omnidirektionalen Fahrzeugs 119 ist der Industrieroboter 111 befestigt, sodass dieser mit dem omnidirektionalen Fahrzeug 117 bewegt werden kann. Das omnidirektionale Fahrzeug 117 kann aber z.B. auch modular ähnlich den in den Figuren 4 bis 8 gezeigten omnidirektionalen Fahrzeugen 40, 70 ausgeführt sein.

Die omnidirektionalen Räder 119 werden jeweils von einem Antrieb 1110, die beispielsweise jeweils in allgemein bekannter Weise einen elektrischen Motor und ein Getriebe aufweisen, angetrieben. Die elektrischen Antriebe 1110 des omnidirektionalen Fahrzeugs 117 sind ferner über elektrische Leitungen 1111 mit dem Steuerrechner 116 des Industrieroboters 111 verbunden, der somit zusätzlich auch die Antriebe 1110 des omnidirektionalen Fahrzeugs 117 ansteuert, sodass sich der Industrieroboter 111 mittels des omnidirektionalen Fahrzeugs 117 aufgrund des auf dem Steuerrechner 116 laufenden Rechenprogramms gezielt bewegt.

## Patentansprüche

1. Omnidirektionales Fahrzeug, aufweisend einen Fahrzeugkörper (20, 90, 118) und mehrere drehbar am Fahrzeugkörper (20, 90, 118) angeordnete omnidirektionale Räder (1, 119), von denen wenigstens eines der omnidirektionalen Räder (1, 119) mittels einer Einzelradaufhängung (23, 923) am Fahrzeugkörper (20, 90, 118) angeordnet ist, wobei die Einzelradaufhängung (23, 923) derart ausgeführt ist, dass das entsprechende omnidirektionale Rad (1, 119) in der Höhe einstellbar ist, und die Einzelradaufhängung (23, 923) derart ausgeführt ist, dass es ihr omnidirektionales Rad (1, 119) in den Fahrzeugkörper (20, 90, 118) einfahren und zumindest teilweise aus dem Fahrzeugkörper (20, 40, 118) ausfahren kann, **dadurch gekennzeichnet, dass** das omnidirektionale Fahrzeug (40, 70, 117) zusätzlich wenigstens ein Standardrad (73) aufweist, das mittels einer Einzelradaufhängung (23) am Fahrzeugkörper (71, 72) drehbar angeordnet ist, wobei die Einzelradaufhängung (23) des Standardrads (73) im Wesentlichen wie die Einzelradaufhängung (23, 923) des omnidirektionalen Rads (1, 119) ausgeführt ist.

2. Omnidirektionales Fahrzeug nach Anspruch 1, aufweisend wenigstens vier omnidirektionale Räder (1, 119), die jeweils mittels einer Einzelradaufhängung (23, 923) am Fahrzeugkörper (20, 90, 118) angeordnet sind, und/oder Antriebe (22) und/oder Bremsen für einzelne der omnidirektionalen Räder (1, 119).

3. Omnidirektionales Fahrzeug nach Anspruch 1 oder 2, dessen Einzelradaufhängung (23, 923) eine Dämpfung aufweist, die das entsprechende omnidirektionale Rad (1, 119) im Betrieb des Fahrzeugs (40, 70, 117) zumindest teilweise dämpft, und oder dessen Einzelradaufhängung einen Schwingungsdämpfer (23, 923) aufweist.

4. Omnidirektionales Fahrzeug nach einem der Ansprüche 1 bis 3, dessen Einzelradaufhängung eine Hubvorrichtung (23) und/oder einen Umlenkhebel aufweist (923).

5. Omnidirektionales Fahrzeug nach einem der Ansprüche 1 bis 4, aufweisend wenigstens einen Abstandssensor, mit dessen Hilfe die Höhe des omnidirektionalen Rades (1, 119) insbesondere für eine Niveauregulierung einstellbar ist.

6. Omnidirektionales Fahrzeug nach einem der Ansprüche 1 bis 5, aufweisend mehrere Standardräder (73) mit einer Einzelradaufhängung (23), von denen wenigstens eines lenkbar ausgeführt ist, wenigstens einem der Räder (1) ein Antrieb (22) zum Antreiben des Standardrades (73) zugeordnet ist und/oder wenigstens einem der Räder (1) eine Bremse zum Abbremsen des Standardrades (73) zugeordnet ist.

7. Omnidirektionales Fahrzeug nach einem der Ansprüche 1 bis 6, dessen Fahrzeugkörper mehrere erste Fahrmodule (20, 90) aufweist, die jeweils aufweisen:
- einen ersten Modulkörper (21, 921),
- das omnidirektionale Rad (1, 119) und
- die Einzelradaufhängung (23, 923), die am ersten Modulkörper (21) angeordnet ist.

8. Omnidirektionales Fahrzeug nach Anspruch 7, bei dem wenigstens eines der ersten Modulkörper (21, 921) einen Antrieb (22) zum Antreiben und/oder eine Bremse zum Abbremsen seines omnidirektionalen Rades (1) aufweist.

9. Omnidirektionales Fahrzeug nach Anspruch 7 oder 8, dessen erste Fahrmodule (20, 90) lösbar zusammengefügt werden können.

10. Omnidirektionales Fahrzeug nach Anspruch 7 oder 8, dessen erste Fahrmodule (20, 90) unlösbar zusammengefügt werden können.

11. Omnidirektionales Fahrzeug nach einem der Ansprüche 8 bis 10, dessen Fahrzeugkörper mehrere zweite Fahrmodule (71, 72) aufweist, die jeweils aufweisen:
- einen zweiten Modulkörper (21),
- das Standardrad (73) und
- die Einzelradaufhängung (23), die am zweiten Modulkörper (21) angeordnet ist.

12. Omnidirektionales Fahrzeug nach Anspruch 11, bei dem wenigstens eines der zweiten Modulkörper (21) einen Antrieb (22) zum Antreiben und/oder eine Bremse zum Bremsen seines Standardrades (73) aufweist.

13. Omnidirektionales Fahrzeug nach Anspruch 11 oder 12, dessen erste und zweite Fahrmodule (20, 71, 72) lösbar zusammengefügt werden können.

14. Omnidirektionales Fahrzeug nach einem der Ansprüche 11 bis 13, bei dem wenigstens eines der zweiten Fahrmodule (71) ausgeführt ist, dass dessen Standardrad (73) lenkbar ist.

15. Vorrichtung, aufweisend:
- einen Industrieroboter (111), der mehreren Roboterachsen (112) und einen Steuerrechner (116) zum Steuern der Roboterachsen (112) aufweist, und
- ein omnidirektionales Trägerfahrzeug (117) nach einem der Ansprüche 1 bis 14, das Antriebe (1110) zum Bewegen der omnidirektionalen Räder (1, 119) aufweist, wobei der Steuerrechner (1116) zusätzlich auch die Antriebe (1110) zum Bewegen der omnidirektionalen Räder (1, 119) steuert.

## Claims

1. Omnidirectional vehicle, comprising a vehicle body (20, 90, 118) and a plurality of omnidirectional wheels (1, 119) arranged rotatably on the vehicle body (20, 90, 118), at least one of the omnidirectional wheels (1, 119) being arranged on the vehicle body (20, 90, 118) by a single wheel suspension (23, 923), wherein the single wheel suspension (23, 923) is designed such that the corresponding omnidirectional wheel (1, 119) can be adjusted in height and the single wheel suspension (23, 923) is designed such that it can drive its omnidirectional wheel (1, 119) into the vehicle body (20, 90, 118) and can drive it at least partly out of the vehicle body (20, 40, 118), **characterised in that** the omnidirectional vehicle (40, 70, 117) additionally comprises at least one standard wheel (73) which is arranged rotatably by means of a single wheel suspension (23) on the vehicle body (71, 72), wherein the single wheel suspension (23) of the standard wheel (73) is designed essentially like the single wheel suspension (23, 923) of the omnidirectional wheel (1, 119).

2. Omnidirectional vehicle according to claim 1, comprising at least four omnidirectional wheels (1, 119) that are arranged respectively on the vehicle body (20, 90, 118) by means of a single wheel suspension (23, 923), and/or drives (22) and/or brakes for individual omnidirectional wheels (1, 119).

3. Omnidirectional vehicle according to claim 1 or 2, wherein the single wheel suspension (23, 923) of the latter comprises a dampener which at least partially dampens the corresponding omnidirectional wheel (1, 119) during the operation of the vehicle (40, 70, 117), and/or its single wheel suspension comprises a vibration damper (23, 923).

4. Omnidirectional vehicle according to any of claims 1 to 3, wherein the single wheel suspension of the latter comprises a lifting device (23) and/or a reversing lever (923).

5. Omnidirectional vehicle according to any of claims 1 to 4, comprising at least one clearance sensor, by means of which the height of the omnidirectional wheel (1, 119) can be adjusted in particular for level adjustment.

6. Omnidirectional vehicle according to any of claims 1 to 5, comprising a plurality of standard wheels (73) with a single wheel suspension (23), at least one of which is designed to be steerable, at least one of the wheels (1) is assigned a drive (22) for driving the standard wheel (73) and/or at least one of the wheels (1) is assigned a brake for braking the standard wheel (73).

7. Omnidirectional vehicle according to any of claims 1 to 6, the vehicle body of which comprises a plurality of first driving modules (20, 90) which comprise respectively:
- a first module body (21, 921),
- the omnidirectional wheel (1, 119) and
- the single wheel suspension (23, 923) which is arranged on the first module body (21).

8. Omnidirectional vehicle according to claim 7, wherein at least one of the first module bodies (21, 921) comprises a drive (22) for driving and/or a brake for braking its omnidirectional wheel (1).

9. Omnidirectional vehicle according to claim 7 or 8, wherein the first driving modules (20, 90) of the latter can be assembled so as to be separable.

10. Omnidirectional vehicle according to claim 7 or 8, wherein the first driving modules (20, 90) of the latter can be assembled so as to be inseparable.

11. Omnidirectional vehicle according to any of claims 8 to 10, wherein the vehicle body of the latter comprises a plurality of second driving modules (71, 72), each comprising:
- a second module body (21),
- the standard wheel (73) and
- the single wheel suspension (23) arranged on the second module body (21).

12. Omnidirectional vehicle according to claim 11, wherein at least one of the second module bodies (21) comprises a drive (22) for the actuation of and/or a brake for braking its standard wheel (73).

13. Omnidirectional vehicle according to claim 11 or 12, wherein the first and second driving modules (20, 71, 72) of the latter can be assembled so as to be separable.

14. Omnidirectional vehicle according to any of claims 11 to 13, wherein at least one of the second driving modules (71) is designed such that its standard wheel (73) is steerable.

15. Device, comprising:
- an industrial robot (111) which comprises multiple robot axes (112) and a control computer (116) that controls the robot axes (112), and
- an omnidirectional support vehicle (117) according to any of claims 1 to 14, which comprises drives (1110) for moving the omnidirectional wheels (1, 119), wherein the control computer (1116) additionally also controls the drives (1110) for moving the omnidirectional wheels (1, 119).

## Revendications

1. Véhicule omnidirectionnel présentant un corps de véhicule (20, 90, 118) et plusieurs roues omnidirectionnelles (1, 119) agencées de manière rotative sur le corps de véhicule (20, 90, 118), dont au moins une des roues omnidirectionnelles (1, 119) est agencée sur le corps de véhicule (20, 90, 118) au moyen d'une suspension de roue indépendante (23, 923), la suspension de roue indépendante (23, 923) étant réalisée de telle sorte que la roue omnidirectionnelle (1, 119) correspondante est réglable en hauteur, et la suspension de roue indépendante (23, 923) étant réalisée de telle sorte qu'elle peut faire rentrer sa roue omnidirectionnelle (1, 119) dans le corps de véhicule (20, 90, 118) et sortir celle-ci au moins en partie hors du corps de véhicule (20, 40, 118), **caractérisé en ce que** le véhicule omnidirectionnel (40, 70, 117) présente additionnellement au moins une roue standard (73) qui est agencée de manière rotative sur le corps de véhicule (71, 72) au moyen d'une suspension de roue indépendante (23), la suspension de roue indépendante (23) de la roue standard (73) étant réalisée sensiblement comme la suspension de roue indépendante (23, 923) de la roue omnidirectionnelle (1, 119).

2. Véhicule omnidirectionnel selon la revendication 1, présentant au moins quatre roues omnidirectionnelles (1, 119), qui sont chacune agencées sur le corps de véhicule (20, 90, 118) au moyen d'une suspension de roue indépendante (23, 923), et/ou des entraînements (22) et/ou des freins pour chacune des roues omnidirectionnelles (1, 119).

3. Véhicule omnidirectionnel selon les revendications 1 ou 2, dont la suspension de roue indépendante (23, 923) présente un amortissement qui amortit au moins en partie la roue omnidirectionnelle (1, 119) correspondante pendant le fonctionnement du véhicule (40, 70, 117), et/ou dont la suspension de roue indépendante présente un amortisseur de vibrations (23, 923).

4. Véhicule omnidirectionnel selon l'une des revendications 1 à 3, dont la suspension de roue indépendante présente un dispositif de levage (23) et/ou un levier de renvoi (923).

5. Véhicule omnidirectionnel selon l'une des revendications 1 à 4, présentant au moins un capteur d'espacement à l'aide duquel la hauteur de la roue omnidirectionnelle (1, 119) est réglable en particulier pour une régulation de niveau.

6. Véhicule omnidirectionnel selon l'une des revendications 1 à 5, présentant plusieurs roues standard (73) avec une suspension de roue indépendante (23) dont au moins une est réalisée directrice, un entraînement pour entraîner la roue standard (73) étant associé à au moins une des roues (1) et/ou un frein pour freiner la roue standard (73) étant associé à au moins une des roues (1).

7. Véhicule omnidirectionnel selon l'une des revendications 1 à 6, dont le corps de véhicule présente plusieurs premiers modules de conduite (20, 90) qui présentent chacun :
- un premier corps de module (21, 921),
- une roue omnidirectionnelle (1, 119) et
- la suspension de roue indépendante (23, 923) qui est agencée sur le premier corps de module (21).

8. Véhicule omnidirectionnel selon la revendication 7, dans lequel au moins un des premier corps de module (21, 921) présente un entraînement (22) pour entraîner et/ou un frein pour freiner sa roue (1) omnidirectionnelle.

9. Véhicule omnidirectionnel selon les revendications 7 ou 8, dont les premier modules de conduite (20, 90) peuvent être assemblés de manière amovible.

10. Véhicule omnidirectionnel selon les revendications 7 ou 8, dont les premier modules de conduite (20, 90) sont assemblés de manière inamovible.

11. Véhicule omnidirectionnel selon l'une des revendications 8 à 10, dont le corps de véhicule présente plusieurs deuxièmes modules de conduite (71, 72) qui présentent chacun :
- un deuxième corps de module (21),
- une roue standard (73) et
- la suspension de roue indépendante (23) qui est agencée sur le deuxième corps de module (21).

12. Véhicule omnidirectionnel selon la revendication 11, dans lequel au moins un des deuxièmes corps de module (21) présente un entraînement (22) pour entraîner et/ou un frein pour freiner sa roue standard (73).

13. Véhicule omnidirectionnel selon les revendications 11 ou 12, dont les premiers et deuxièmes modules de conduite (20, 71, 72) peuvent être assemblés de manière amovible.

14. Véhicule omnidirectionnel selon l'une des revendications 11 à 13, dans lequel au moins un des deuxièmes modules de conduite (71) est réalisé de telle sorte que sa roue standard (73) est directrice.

15. Dispositif présentant :
- un robot industriel (111) qui présente plusieurs axes de robot (112) et un ordinateur de commande (116) pour commander les axes de robot (112), et
- un véhicule porteur omnidirectionnel (117) selon l'une des revendications 1 à 14, qui présente des entraînements (1110) pour déplacer les roues omnidirectionnelles (1, 119), l'ordinateur de commande (1116) commandant additionnellement aussi les entraînements (1110) pour déplacer les roues omnidirectionnelles (1, 119).
